# EUROPÄISCHE PATENTSCHRIFT

(11) **EP 3 681 261 B1**
(45) Veröffentlichungstag und Bekanntmachung des Hinweises auf die Patenterteilung: **22.09.2021**
(21) Anmeldenummer: 18762268.3
(22) Anmeldetag: 29.08.2018
(51) Int. Cl.: A01C 21/00, A01C 17/00

(54) **VERFAHREN ZUM AUSBRINGEN VON STREUGUT**
SYSTEM FOR DISTRIBUTING GRIT
PROCÉDÉ D'ÉPANDAGE DE MATIÈRE D'ÉPANDAGE

(30) Priorität: 11.09.2017 DE 102017120870
(43) Veröffentlichungstag der Anmeldung: 22.07.2020
(73) Patentinhaber: Amazonen-Werke H. Dreyer SE & Co. KG, 49205 Hasbergen (DE)
(72) Erfinder: RAHE, Florian, 49504 Lotte (DE)
(86) Internationale Anmeldenummer: PCT/EP2018/073179
(87) Internationale Veröffentlichungsnummer: WO 2019/048297

(56) Entgegenhaltungen:
- EP-A1- 2 409 559
- EP-A1- 2 689 649
- US-B1- 9 649 646

## Beschreibung

Die Erfindung betrifft ein Verfahren zum Ausbringen von Streugut nach dem Oberbegriff des Patentanspruchs 1, ein Streugerät zum Ausbringen von Streugut nach dem Oberbegriff des Patentanspruchs 9 und eine Ausbringkombination nach dem Oberbegriff des Patentanspruchs 10.

Beim Ausbringen von Streugut, wie beispielsweise Dünger, auf einen Nutzpflanzenbestand wird stets angestrebt, das Streugut möglichst gleichmäßig zu verteilen. Im Innenbereich eines Feldes wird eine gleichmäßige Streugutverteilung beispielsweise dadurch erreicht, dass die Menge des ausgebrachten Streuguts mit zunehmendem Abstand von einer zum Ausbringen genutzten Fahrgasse zunächst abnimmt, sodass sich eine von der Fahrgasse nach außen erstreckende Dreiecksverteilung an jeder Fahrgassenseite ergibt. Durch einen weiteren Ausbringvorgang, bei welchem das Streugerät entlang einer benachbarten Fahrgasse bewegt wird, nimmt die ausgebrachte Streugutmenge ebenfalls mit zunehmendem Abstand von der Fahrgasse ab, sodass sich im Überlappungsbereich zweier benachbarter Fahrgassen eine gleichmäßige Streugutverteilung ergibt.

Eine gesonderte Ausbringung findet im Bereich des Vorgewendes bzw. am Feldrand statt, da hier besondere gesetzliche Vorgaben zu beachten sind, welche eine besondere Verteilcharakteristik erfordern.

Da die Geometrie von Feldern lediglich in seltenen Fällen rechtwinklig ist, ergeben sich im Randbereich häufig keilförmige Flächen, bei welchen die Ausbringung des Streuguts an schräg verlaufende feldinterne Streugrenzen anzupassen ist. Um in diesen Fällen eine Fehlausbringung zu vermeiden, ist die Streugutausbringung möglichst präzise an die Keilform des Feldes anzupassen. Hierbei ist es üblich, die Drehzahl der Schleuderscheiben, den Aufgabepunkt des Streuguts auf die Schleuderscheiben, die Ausbringmenge, den Abwurfwinkel und/oder die Wurfweite entsprechend anzupassen.

Aus der Druckschrift EP 2 689 649 A1 sind ein gattungsgemäßes Verfahren und ein Düngerstreuer bekannt, bei welchem das Dosierorgan, welches der der feldinternen Streugrenze zugewandten Schleuderscheibe zugeordnet ist, in einem Nahbereich zu der feldinternen Streugrenze abgeschaltet wird, wobei gleichzeitig die Menge an Streugut, welche auf die der feldinternen Streugrenze abgewandte Schleuderscheibe aufgegeben wird, erhöht wird. Durch eine Verstellung der Parameter des Streugeräts wird erreicht, dass die der feldinternen Streugrenze abgewandte Schleuderscheibe in dem Nahbereich zu der feldinternen Streugrenze die Streugutausbringung alleine übernimmt. Ein gattungsgemäßes Verfahren ist ferner aus der US 9 649 646 B1 bekannt.

Aus den Druckschriften EP 2 417 848 A2 und EP 2 409 559 B1 sind weitere Lösungsansätze bekannt, welche zu einer Steigerung der Gleichmäßigkeit bei der Ausbringung von Streugut in keilförmig zulaufenden Feldbereichen führen sollen.

Die bekannten Lösungen führen jedoch nicht zu einer zufriedenstellenden Streugutverteilung im Bereich von schräg verlaufenden feldinternen Streugrenzen oder bedingen einen zeitaufwendigen Ausbringvorgang.

Die der Erfindung zugrunde liegende Aufgabe besteht somit darin, die Gleichmäßigkeit bei der Ausbringung von Streugut im Bereich von schräg verlaufenden feldinternen Streugrenzen zu steigern, ohne dabei die erforderliche Ausbringzeit wesentlich zu erhöhen.

Die Aufgabe wird gelöst durch ein Verfahren der eingangs genannten Art, bei welchem die Menge an Streugut, welche auf die der feldinternen Streugrenze abgewandte Schleuderscheibe des Streugeräts aufgegeben wird, während des Durchfahrens eines ersten Nahbereichs zur feldinternen Streugrenze erhöht wird.

Die Erfindung macht sich die Erkenntnis zunutze, dass eine aufeinander abgestimmte Reduzierung der Menge an Streugut, welche auf die der feldinternen Streugrenze zugewandte Schleuderscheibe des Streugeräts aufgegeben wird, und Erhöhung der Menge an Streugut, welche auf die der feldinternen Streugrenze abgewandte Schleuderscheibe des Streugeräts aufgegeben wird, zu einer erheblichen Steigerung der Gleichmäßigkeit der Streugutverteilung im Bereich der feldinternen Streugrenze führt. Das Reduzieren der Menge an Streugut, welche auf die der feldinternen Streugrenze zugewandte Schleuderscheibe des Streugeräts aufgegeben wird, umfasst nicht das Abschalten des Dosierorgans, wodurch kein weiteres Streugut auf die der feldinternen Streugrenze zugewandte Schleuderscheibe des Streugeräts aufgegeben würde.

Der erste Nahbereich zur feldinternen Streugrenze erstreckt sich vorzugsweise von einem ersten Abstand des Streugeräts zu der feldinternen Streugrenze bis zu einem zweiten Abstand des Streugeräts zu der feldinternen Streugrenze. Die feldinterne Streugrenze kann dabei geradlinig oder gebogen verlaufen. Das während des Durchfahrens des ersten Nahbereichs zur feldinternen Streugrenze stattfindende Reduzieren der Menge an Streugut, welche auf die der feldinternen Streugrenze zugewandte Schleuderscheibe des Streugeräts aufgegeben wird, erfolgt vorzugsweise stetig oder in einer Mehrzahl von Stufen. Das während des Durchfahrens des ersten Nahbereichs zur feldinternen Streugrenze stattfindende Erhöhen der Menge an Streugut, welche auf die der feldinternen Streugrenze abgewandte Schleuderscheibe des Streugeräts aufgegeben wird, erfolgt vorzugsweise stetig oder in einer Mehrzahl von Stufen. Der Aufgabepunkt des auf die der feldinternen Streugrenze abgewandten Schleuderscheibe des Streugeräts aufgegebenen Streuguts bleibt während des Durchfahrens des ersten Nahbereichs vorzugsweise unverändert. Der Aufgabepunkt des auf die der feldinternen Streugrenze zugewandte Schleuderscheibe des Streugeräts aufgegebenen Streuguts bleibt während des Durchfahrens des ersten Nahbereichs vorzugsweise unverändert.

Erfindungsgemäß wird die Menge an Streugut, welche auf die der feldinternen Streugrenze abgewandte Schleuderscheibe des Streugeräts aufgegeben wird, während des Durchfahrens eines zweiten Nahbereichs der feldinternen Streugrenze, welcher an den ersten Nahbereich zur feldinternen Streugrenze anschließt, reduziert. Hierbei entspricht der Anteil, um welchen die Menge an Streugut, welche während des Durchfahrens des zweiten Nahbereichs zur feldinternen Streugrenze auf die der feldinternen Streugrenze abgewandte Schleuderscheibe des Streugeräts aufgegeben wird, reduziert wird, dem Anteil, um welchen die Menge an Streugut, welche während des Durchfahrens des ersten Nahbereichs zur feldinternen Streugrenze auf die der feldinternen Streugrenze abgewandte Schleuderscheibe des Streugeräts aufgegeben wurde, erhöht wurde. Das während des Durchfahrens des zweiten Nahbereichs zur feldinternen Streugrenze stattfindende Reduzieren der Menge an Streugut, welche auf die der feldinternen Streugrenze abgewandte Schleuderscheibe des Streugeräts aufgegeben wird, erfolgt vorzugsweise stetig oder in einer Mehrzahl von Stufen.

In einer weiteren bevorzugten Ausführungsform des erfindungsgemäßen Verfahrens wird die Drehgeschwindigkeit der der feldinternen Streugrenze zugewandten Schleuderscheibe des Streugeräts während des Durchfahrens des ersten Nahbereichs zur feldinternen Streugrenze reduziert. Alternativ oder zusätzlich wird die Drehgeschwindigkeit der der feldinternen Streugrenze abgewandten Schleuderscheibe des Streugeräts während des Durchfahrens des ersten Nahbereichs zur feldinternen Streugrenze reduziert. Die Drehgeschwindigkeit der der feldinternen Streugrenze zugewandten Schleuderscheibe des Streugeräts wird zunächst stärker reduziert als die Drehgeschwindigkeit der der feldinternen Streugrenze abgewandten Schleuderscheibe des Streugeräts. Bei Verlassen des ersten Nahbereichs der feldinternen Streugrenze weisen die der feldinternen Streugrenze zugewandte Schleuderscheibe des Streugeräts und die der feldinternen Streugrenze abgewandte Schleuderscheibe des Streugeräts vorzugsweise im Wesentlichen identische Drehgeschwindigkeiten auf.

In einer bevorzugten Weiterbildung des erfindungsgemäßen Verfahrens wird die Menge an Streugut, welche auf die der feldinternen Streugrenze zugewandte Schleuderscheibe des Streugeräts aufgegeben wird, während des Durchfahrens eines zweiten Nahbereichs zur feldinternen Streugrenze, welcher an den ersten Nahbereich zur feldinternen Streugrenze anschließt, reduziert. Vorzugsweise wird die Menge an Streugut, welche auf die der feldinternen Streugrenze zugewandte Schleuderscheibe des Streugeräts aufgegeben wird, während des Durchfahrens des zweiten Nahbereichs zur feldinternen Streugrenze auf null reduziert. Der zweite Nahbereich zur feldinternen Streugrenze erstreckt sich vorzugsweise von dem zweiten Abstand des Streugeräts zu der feldinternen Streugrenze bis zu einem dritten Abstand des Streugeräts zu der feldinternen Streugrenze. Das während des Durchfahrens des zweiten Nahbereichs zur feldinternen Streugrenze stattfindende Reduzieren der Menge an Streugut, welche auf die der feldinternen Streugrenze zugewandte Schleuderscheibe des Streugeräts aufgegeben wird, erfolgt vorzugsweise stetig oder in einer Mehrzahl von Stufen.

In einer anderen Ausführungsform des erfindungsgemäßen Verfahrens entspricht die Gesamtmenge an Streugut, welche während des Durchfahrens des ersten Nahbereichs und des zweiten Nahbereichs auf die der feldinternen Streugrenze abgewandte Schleuderscheibe des Streugeräts und auf die der feldinternen Streugrenze zugewandte Schleuderscheibe des Streugeräts aufgegeben wird, der üblichen Gesamtmenge an Streugut für diese Fläche. Als Referenzwert für die übliche Gesamtmenge an Streugut für eine Fläche kann beispielsweise der Innenbereich eines Feldes herangezogen werden, in welchem aufgrund fehlender feldinterner Streugrenzen eine entsprechende Anpassung der Verteilcharakteristik des Streugeräts nicht notwendig ist. Da das erfindungsgemäße Verfahren auch in keilförmig zulaufenden Feldbereichen eine hohe Ausbringgleichmäßigkeit gewährleistet, besteht keine Notwendigkeit, von der üblichen Ausbringmenge für diese Fläche abzuweichen.

Bevorzugt ist außerdem ein erfindungsgemäßes Verfahren, bei welchem die während des Durchfahrens des ersten Nahbereichs und des zweiten Nahbereichs auf die der feldinternen Streugrenze abgewandte Schleuderscheibe des Streugeräts zusätzlich aufgegebene Streugutzusatzmenge der Streugutmindermenge entspricht, welche während des Durchfahrens des ersten Nahbereichs und des zweiten Nahbereichs auf die der feldinternen Streugrenze zugewandte Schleuderscheibe des Streugeräts weniger aufgegeben wird. Die Streugutzusatzmenge entspricht vorzugsweise der Mengendifferenz zwischen der tatsächlich auf die der feldinternen Streugrenze abgewandte Schleuderscheibe des Streugeräts aufgegebene Streugutmenge während des Durchfahrens des ersten Nahbereichs und des zweiten Nahbereichs und einer theoretischen Streugutmenge, welche auf die der feldinternen Streugrenze abgewandte Schleuderscheibe des Streugeräts aufgegeben worden wäre, wenn die auf die der feldinternen Streugrenze abgewandte Schleuderscheibe des Streugeräts aufgegebene Streugutmenge im ersten Nahbereich weder erhöht noch im zweiten Nahbereich reduziert worden wäre, sondern während des Durchfahrens des ersten Nahbereichs und des zweiten Nahbereichs konstant gehalten worden wäre. Die Streugutmindermenge entspricht vorzugsweise der Mengendifferenz zwischen der tatsächlich auf die der feldinternen Streugrenze zugewandte Schleuderscheibe des Streugeräts aufgegebenen Streuguts während des Durchfahrens des ersten Nahbereichs und des zweiten Nahbereichs und einer theoretischen Streugutmenge, welche auf die der feldinternen Streugrenze zugewandte Schleuderscheibe des Streugeräts aufgegeben worden wäre, wenn die auf die der feldinternen Streugrenze zugewandte Schleuderscheibe des Streugeräts aufgegebene Streugutmenge während des Durchfahrens des ersten Nahbereichs und des zweiten Nahbereichs kontinuierlich und gleichmäßig auf null abgesenkt worden wäre.

Vorzugsweise umfasst das erfindungsgemäße Verfahren das Erhöhen der Drehgeschwindigkeit der der feldinternen Streugrenze zugewandten Schleuderscheibe des Streugeräts während des Durchfahrens des zweiten Nahbereichs der feldinternen Streugrenze. Vorzugsweise entspricht der Anteil, um welchen die Drehgeschwindigkeit der der feldinternen Streugrenze zugewandten Schleuderscheibe des Streugeräts während des Durchfahrens des zweiten Nahbereichs zur feldinternen Streugrenze erhöht wird, dem Anteil, um welchen die Drehgeschwindigkeit der der feldinternen Streugrenze zugewandten Schleuderscheibe des Streugeräts während des Durchfahrens des ersten Nahbereichs zur feldinternen Streugrenze reduziert wurde. Da die auf die der feldinternen Streugrenze zugewandte Schleuderscheibe aufgegebene Streugutmenge während des Durchfahrens des zweiten Nahbereichs sehr gering ist, hat die Drehzahl der der feldinternen Streugrenze zugewandten Schleuderscheibe eine untergeordnete Bedeutung. Aus diesem Grund kann die Drehzahl der der feldinternen Streugrenze zugewandten Schleuderscheibe während des Durchfahrens des zweiten Nahbereichs oder, nachdem der zweite Nahbereich verlassen wurde, wieder auf eine Standarddrehzahl erhöht werden, sodass eine geeignete Drehzahl beim erneuten Öffnen des Dosierorgans zur Verfügung steht. Vorzugsweise werden sämtliche Normalstreueinstellungen, mit welchem das Streugerät im Innenbereich des Feldes betrieben wird, selbsttätig eingestellt, sobald die auf eine Schleuderscheibe aufgegebene Streugutmenge auf null abgesunken ist.

Der Aufgabepunkt des auf die der feldinternen Streugrenze abgewandten Schleuderscheibe des Streugeräts aufgegebenen Streuguts bleibt während des Durchfahrens des zweiten Nahbereichs vorzugsweise unverändert. Der Aufgabepunkt des auf die der feldinternen Streugrenze zugewandten Schleuderscheibe des Streugeräts aufgegebenen Streuguts bleibt während des Durchfahrens des zweiten Nahbereichs vorzugsweise unverändert.

In einer anderen Ausführungsform des erfindungsgemäßen Verfahrens wird die Menge an Streugut, welche auf die der feldinternen Streugrenze abgewandte Schleuderscheibe des Streugeräts aufgegeben wird, während des Durchfahrens eines dritten Nahbereichs zur feldinternen Streugrenze, welcher an den zweiten Nahbereich zur feldinternen Streugrenze anschließt, reduziert. Vorzugsweise wird die Menge an Streugut, welche auf die der feldinternen Streugrenze zugewandte Schleuderscheibe des Streugeräts aufgegeben wird, während des Durchfahrens des dritten Nahbereichs zur feldinternen Streugrenze auf null reduziert. Der dritte Nahbereich zur feldinternen Streugrenze erstreckt sich von dem dritten Abstand des Streugeräts zu der feldinternen Streugrenze bis zu der feldinternen Streugrenze selbst oder bis einem vierten Abstand des Streugeräts zu der feldinternen Streugrenze. Das während des Durchfahrens des dritten Nahbereichs zur feldinternen Streugrenze stattfindende Reduzieren der Menge an Streugut, welche auf die der feldinternen Streugrenze abgewandte Schleuderscheibe des Streugeräts aufgegeben wird, erfolgt vorzugsweise stetig oder in einer Mehrzahl von Stufen. Während des Durchfahrens des dritten Nahbereichs zur feldinternen Streugrenze wird auf die der feldinternen Streugrenze zugewandte Schleuderscheibe des Streugeräts vorzugsweise kein Streugut aufgegeben.

In einer Weiterbildung des erfindungsgemäßen Verfahrens wird der Aufgabepunkt des auf die der feldinternen Streugrenze abgewandten Schleuderscheibe des Streugeräts aufgegebenen Streuguts während des Durchfahrens des dritten Nahbereichs zur feldinternen Streugrenze verändert. Der Aufgabepunkt des auf die der feldinternen Streugrenze abgewandten Schleuderscheibe des Streugeräts aufgegebenen Streuguts kann während des Durchfahrens des dritten Nahbereichs zur feldinternen Streugrenze beispielsweise in radialer Richtung, in Drehrichtung und/oder entgegen der Drehrichtung der der feldinternen Streugrenze abgewandten Schleuderscheibe verändert werden. Der Aufgabepunkt des auf die der feldinternen Streugrenze zugewandten Schleuderscheibe des Streugeräts aufgegebenen Streuguts bleibt während des Durchfahrens des dritten Nahbereichs zur feldinternen Streugrenze im Wesentlichen unverändert.

Außerdem ist ein erfindungsgemäßes Verfahren bevorzugt, bei welchem das Verändern des Aufgabepunkts des auf die der feldinternen Streugrenze abgewandten Schleuderscheibe des Streugeräts aufgegebenen Streuguts das Verändern der Relativposition und/oder der Relativausrichtung der der feldinternen Streugrenze abgewandten Schleuderscheibe und eines Dosierorgans, welches der der feldinternen Streugrenze abgewandten Schleuderscheibe zugeordnet ist, umfasst. Alternativ oder zusätzlich umfasst das Verändern des Aufgabepunkts des auf die der feldinternen Streugrenze abgewandten Schleuderscheibe des Streugeräts aufgegebenen Streuguts das Bewegen der der feldinternen Streugrenze abgewandten Schleuderscheibe und/oder das Bewegen eines Dosierorgans, welches der der feldinternen Streugrenze abgewandten Schleuderscheibe zugeordnet ist.

Darüber hinaus ist ein erfindungsgemäßes Verfahren vorteilhaft, bei welchem das Verändern des Aufgabepunkts des auf die der feldinternen Streugrenze abgewandten Schleuderscheibe des Streugeräts aufgegebenen Streuguts derart erfolgt, dass das Streubild der der feldinternen Streugrenze abgewandten Schleuderscheibe von der Streugrenze weggedreht wird.

Darüber hinaus ist ein erfindungsgemäßes Verfahren bevorzugt, bei welchem die Drehgeschwindigkeit der der feldinternen Streugrenze abgewandten Schleuderscheibe des Streugeräts während des Durchfahrens des dritten Nahbereichs zur feldinternen Streugrenze erhöht wird. Der Anteil, um welchen die Drehgeschwindigkeit der der feldinternen Streugrenze abgewandten Schleuderscheibe des Streugeräts während des Durchfahrens des dritten Nahbereichs zur feldinternen Streugrenze erhöht wird, entspricht vorzugsweise dem Anteil, um welchen die Drehgeschwindigkeit der der feldinternen Streugrenze abgewandten Schleuderscheibe des Streugeräts während des Durchfahrens des ersten Nahbereichs zur feldinternen Streugrenze reduziert wird.

Die der Erfindung zugrunde liegende Aufgabe wird ferner durch ein Streugerät der eingangs genannten Art gelöst, wobei das Streugerät dazu eingerichtet ist, das Verfahren zum Ausbringen von Streugut nach einer der vorstehend beschriebenen Ausführungsformen auszuführen. Hinsichtlich der Vorteile und Modifikationen des erfindungsgemäßen Streugeräts wird auf die Vorteile und Modifikationen des erfindungsgemäßen Verfahrens verwiesen.

Die der Erfindung zugrunde liegende Aufgabe wird außerdem durch eine Ausbringkombination der eingangs genannten Art gelöst, wobei die erfindungsgemäße Ausbringkombination dazu eingerichtet ist, das Verfahren zum Ausbringen von Streugut nach einer der vorstehend beschriebenen Ausführungsformen auszuführen. Hinsichtlich der Vorteile und Modifikationen der erfindungsgemäßen Ausbringkombination wird auf die Vorteile und Modifikationen des erfindungsgemäßen Verfahrens verwiesen.

Weitere Einzelheiten der Erfindung sind der Figurenbeschreibung und den Zeichnungen zu entnehmen. Dabei zeigen
- Fig. 1: ein Ausführungsbeispiel einer erfindungsgemäßen Ausbringkombination beim Ausführen des erfindungsgemäßen Verfahrens in einer schematischen Darstellung;
- Fig. 2: die in der Fig. 1 dargestellte Ausbringkombination beim Ausführen des erfindungsgemäßen Verfahrens in einer schematischen Darstellung;
- Fig. 3: die in der Fig. 1 dargestellte Ausbringkombination beim Ausführen des erfindungsgemäßen Verfahrens in einer schematischen Darstellung;
- Fig. 4: die in der Fig. 1 dargestellte Ausbringkombination beim Ausführen des erfindungsgemäßen Verfahrens in einer schematischen Darstellung; und
- Fig. 5: die Veränderung der Ausbringparameter beim Ausführen des erfindungsgemäßen Verfahrens in einem schematischen Diagramm.

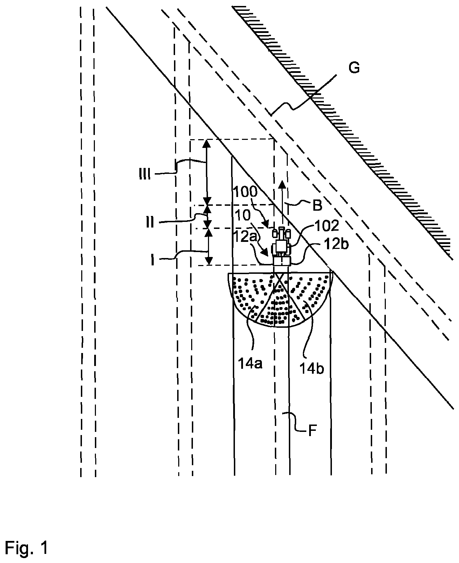

Die Fig. 1 bis Fig. 4 zeigen eine Ausbringkombination 100 mit einem als Zentrifugaldüngerstreuer ausgebildeten Streugerät 10 zum Ausbringen von Streugut und einem das Streugerät 10 tragenden und als Traktor ausgebildeten Fahrzeug 102.

Das Streugerät 10 umfasst zwei rotierend antreibbare und nebeneinander angeordnete Schleuderscheiben 12a, 12b. Die Ausbringkombination 100 bewegt sich in Bewegungsrichtung B auf eine schräg zu der aktuellen Fahrgasse F der Ausringkombination 100 verlaufende feldinterne Streugrenze G zu, wobei die feldinterne Streugrenze G eine Grenzfahrgasse darstellt. Dadurch, dass die feldinterne Streugrenze G schräg zu der Fahrgasse F verläuft, wird eine Anpassung der Verteilcharakteristik des Streugeräts 10 während des Befahrens der Nahbereiche I, II, III innerhalb der Fahrgasse F erforderlich.

Die Schleuderscheibe 12a ist auf einer der feldinternen Streugrenze G abgewandten Seite angeordnet, wobei der Streugutauswurf der Schleuderscheibe 12a das Streubild 14a aufweist. Die Schleuderscheibe 12b ist auf einer der feldinternen Streugrenze G zugewandten Seite angeordnet, wobei der Streugutauswurf der Schleuderscheibe 12b das Streubild 14b aufweist.

Vor oder während des Ausbringvorgangs wird zunächst die in Bewegungsrichtung B des Streugeräts 10 vor dem Streugerät 10 verlaufende feldinterne Streugrenze G erfasst.

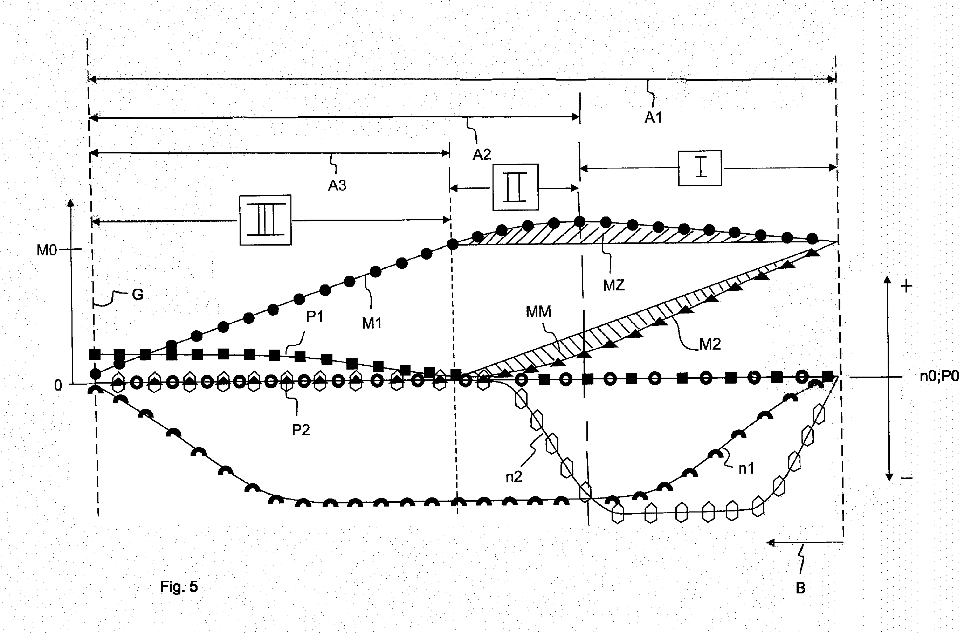

In der Fig. 1 befindet sich das Streugerät 10 unmittelbar vor einem ersten Nahbereich I. In Zusammenschau mit der Fig. 5 ergibt sich, dass während des Durchfahrens des ersten Nahbereichs die Menge M2 an Streugut, welche auf die der feldinternen Streugrenze G zugewandte Schleuderscheibe 12b des Streugeräts 10 aufgegeben wird, ausgehend von einer Normalmenge M0 reduziert wird. Gleichzeitig wird die Menge M1 an Streugut, welche auf die der feldinternen Streugrenze G abgewandte Schleuderscheibe 12a des Streugeräts 10 aufgegeben wird, während des Durchfahrens des ersten Nahbereichs I zur feldinternen Streugrenze G, ausgehend von einer Normalmenge MO, erhöht. Der erste Nahbereich I zur feldinternen Streugrenze G erstreckt sich von einem ersten Abstand A1 des Streugeräts 10 zu der feldinternen Streugrenze G bis zu einem zweiten Abstand A2 des Streugeräts 10 zu der feldinternen Streugrenze G.

Der Aufgabepunkt P1 des auf die der feldinternen Streugrenze G abgewandten Schleuderscheibe 12a des Streugeräts 10 aufgegebenen Streuguts und der Aufgabepunkt P2 des auf die der feldinternen Streugrenze G zugewandten Schleuderscheibe 12b des Streugeräts 10 aufgegebenen Streuguts bleibt während des Durchfahrens des ersten Nahbereichs I unverändert, sodass jeweils der Aufgabepunkt P0, welcher im Normalbetrieb des Streugeräts 10 während des Ausbringens von Streugut im Feldinneren eingestellt ist, im ersten Nahbereich I beibehalten wird. Außerdem werden die Drehgeschwindigkeiten n1, n2 beider Schleuderscheiben 12a, 12b des Streugeräts 10 während des Durchfahrens des ersten Nahbereichs I zur feldinternen Streugrenze G, ausgehend von einer Normaldrehzahl n0, reduziert, wobei die Schleuderscheiben 12a, 12b bei Verlassen des ersten Nahbereichs I zur feldinternen Streugrenze G identische Drehgeschwindigkeiten aufweisen.

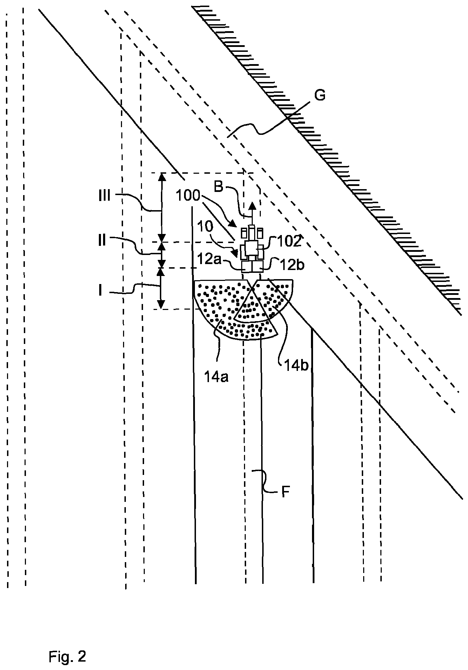

In der Fig. 2 befindet sich das Streugerät 10 unmittelbar vor einem zweiten Nahbereich II, welcher an den ersten Nahbereich I zur feldinternen Streugrenze G anschließt. In Zusammenschau mit der Fig. 5 ergibt sich, dass die Menge M2 an Streugut, welche auf die der feldinternen Streugrenze G zugewandte Schleuderscheibe 12b des Streugeräts 10 aufgegeben wird, während des Durchfahrens des zweiten Nahbereichs II zur feldinternen Streugrenze G auf null reduziert wird. Gleichzeitig wird Menge M1 an Streugut, welche auf die der feldinternen Streugrenze G abgewandte Schleuderscheibe 12a des Streugeräts 10 aufgegeben wird, während des Durchfahrens eines zweiten Nahbereichs II zur feldinternen Streugrenze G reduziert. Der Anteil, um welchen die Menge M1 an Streugut, welche während des Durchfahrens des zweiten Nahbereichs II zur feldinternen Streugrenze G auf die der feldinternen Streugrenze G abgewandte Schleuderscheibe 12a des Streugeräts 10 aufgegeben wird, reduziert wird, entspricht dem Anteil, um welchen die Menge M1 an Streugut, welche während des Durchfahrens des ersten Nahbereichs I zur feldinternen Streugrenze G auf die der feldinternen Streugrenze G abgewandte Schleuderscheibe 12a des Streugeräts 10 aufgegeben wurde, erhöht wurde, sodass die Menge M1 an Streugut, welche auf die der feldinternen Streugrenze G abgewandte Schleuderscheibe 12a des Streugeräts 10 aufgegeben wird, bei Verlassen des zweiten Nahbereichs II wieder der Normalmenge M0 entspricht.

Die Gesamtmenge an Streugut, welche während des Durchfahrens des ersten Nahbereichs I und des zweiten Nahbereichs II auf die der feldinternen Streugrenze G abgewandte Schleuderscheibe 12a des Streugeräts 10 und auf die der feldinternen Streugrenze G zugewandte Schleuderscheibe 12b des Streugeräts 10 aufgegeben wird, entspricht dabei der üblichen Gesamtmenge an Streugut für diese Fläche. Die während des Durchfahrens des ersten Nahbereichs I und des zweiten Nahbereichs II auf die der feldinternen Streugrenze G abgewandte Schleuderscheibe 12a des Streugeräts 10 zusätzlich aufgegebene Streugutzusatzmenge MZ entspricht der Streugutmindermenge MM, welche während des Durchfahrens des ersten Nahbereichs I und des zweiten Nahbereichs II auf die der feldinternen Streugrenze G zugewandte Schleuderscheibe 12b des Streugeräts 10 weniger aufgegeben wird. Die Streugutzusatzmenge MZ entspricht der Mengendifferenz zwischen der tatsächlich auf die der feldinternen Streugrenze G abgewandte Schleuderscheibe 12a des Streugeräts 10 aufgegebene Streugutmenge während des Durchfahrens des ersten Nahbereichs I und des zweiten Nahbereichs II und einer theoretischen Streugutmenge, welche auf die der feldinternen Streugrenze G abgewandte Schleuderscheibe 12a des Streugeräts 10 aufgegeben worden wäre, wenn die auf die der feldinternen Streugrenze G abgewandte Schleuderscheibe 12a des Streugeräts 10 aufgegebene Streugutmenge im ersten Nahbereich I weder erhöht noch im zweiten Nahbereich II reduziert worden wäre, sondern während des Durchfahrens des ersten Nahbereichs I und des zweiten Nahbereichs II konstant gehalten worden wäre. Die Streugutmindermenge MM entspricht der Mengendifferenz zwischen der tatsächlich auf die der feldinternen Streugrenze G zugewandte Schleuderscheibe 12b des Streugeräts 10 aufgegebenen Streuguts während des Durchfahrens des ersten Nahbereichs I und des zweiten Nahbereichs II und einer theoretischen Streugutmenge, welche auf die der feldinternen Streugrenze G zugewandte Schleuderscheibe 12b des Streugeräts 10 aufgegeben worden wäre, wenn die auf die der feldinternen Streugrenze G zugewandte Schleuderscheibe 12b des Streugeräts 10 aufgegebene Streugutmenge während des Durchfahrens des ersten Nahbereichs I und des zweiten Nahbereichs II kontinuierlich und gleichmäßig auf null abgesenkt worden wäre.

Der zweite Nahbereich II zur feldinternen Streugrenze G erstreckt sich von dem zweiten Abstand A2 des Streugeräts 10 zu der feldinternen Streugrenze G bis zu einem dritten Abstand A3 des Streugeräts 10 zu der feldinternen Streugrenze G.

Während des Durchfahrens des zweiten Nahbereichs II zur feldinternen Streugrenze G wird außerdem die Drehgeschwindigkeit n2 der der feldinternen Streugrenze G zugewandten Schleuderscheibe 12b des Streugeräts 10 wieder auf die Normaldrehzahl n0 erhöht, wobei die Drehgeschwindigkeit n1 der der feldinternen Streugrenze G abgewandten Schleuderscheibe 12b des Streugeräts 10 konstant gehalten wird. Die Aufgabepunkte P1, P2 des auf die Schleuderscheiben 12a, 12b des Streugeräts 10 aufgegebenen Streuguts bleiben während des Durchfahrens des zweiten Nahbereichs II unverändert.

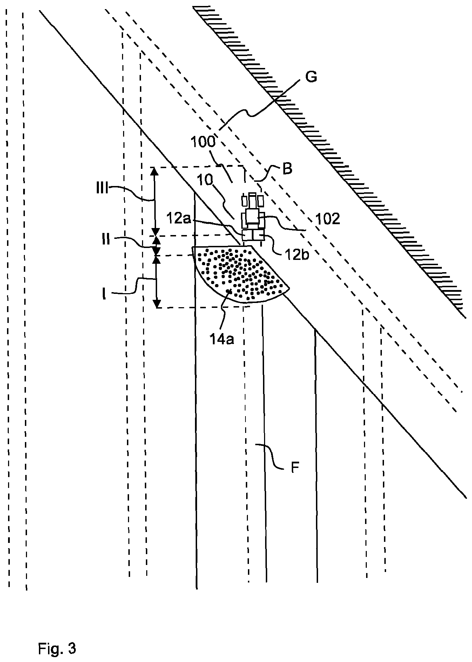

In der Fig. 3 befindet sich das Streugerät 10 unmittelbar vor einem dritten Nahbereich III, welcher an den zweiten Nahbereich II zur feldinternen Streugrenze G anschließt. In Zusammenschau mit der Fig. 5 ergibt sich, dass die Menge M1 an Streugut, welche auf die der feldinternen Streugrenze G abgewandte Schleuderscheibe 12a des Streugeräts 10 aufgegeben wird, während des Durchfahrens eines dritten Nahbereichs III zur feldinternen Streugrenze G auf null reduziert wird. Während des Durchfahrens des dritten Nahbereichs III zur feldinternen Streugrenze G wird auf die der feldinternen Streugrenze G zugewandte Schleuderscheibe 12b des Streugeräts 10 kein Streugut aufgegeben. Der dritte Nahbereich III zur feldinternen Streugrenze G erstreckt sich von dem dritten Abstand A3 des Streugeräts 10 zu der feldinternen Streugrenze G bis zu der feldinternen Streugrenze G.

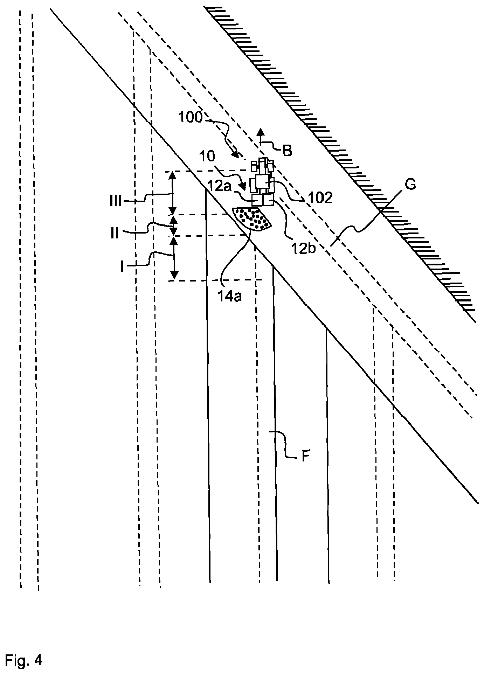

In der Fig. 4 befindet sich das Streugerät 10 in dem dritten Nahbereich III. In Zusammenschau mit der Fig. 5 ergibt sich, dass der Aufgabepunkt P1 des auf die der feldinternen Streugrenze G abgewandten Schleuderscheibe 12a des Streugeräts 10 aufgegebenen Streuguts während des Durchfahrens des dritten Nahbereichs III zur feldinternen Streugrenze G derart verändert wird, dass das Streubild 14a der der feldinternen Streugrenze G abgewandten Schleuderscheibe 12a von der Streugrenze G weggedreht wird. Der Aufgabepunkt P2 des auf die der feldinternen Streugrenze G zugewandten Schleuderscheibe 12b des Streugeräts 10 aufgegebenen Streuguts bleibt während des Durchfahrens des dritten Nahbereichs III zur feldinternen Streugrenze G unverändert.

Die Drehgeschwindigkeit n1 der der feldinternen Streugrenze G abgewandten Schleuderscheibe 12a des Streugeräts 10 wird während des Durchfahrens des dritten Nahbereichs III zur feldinternen Streugrenze G wieder auf die Normaldrehzahl n0 angehoben und somit der Drehzahl n2 der der feldinternen Streugrenze G zugewandten Schleuderscheibe 12b des Streugeräts 10 angepasst.

### Bezugszeichenliste

- 10: Streugerät
- 12a, 12b: Schleuderscheiben
- 14a, 14b: Streubilder

- 100: Ausbringkombination
- 102: Fahrzeug

- I-III: Nahbereiche
- G: Streugrenze
- M0: Normalmenge
- M1, M2: Menge an Streugut
- MZ: Streugutzusatzmenge
- MM: Streugutmindermenge
- A1-A3: Abstände
- P0: Aufgabepunkt im Normalbetrieb
- P1, P2: Aufgabepunkte
- n0: Normaldrehzahl
- n1, n2: Drehgeschwindigkeiten

- B: Bewegungsrichtung
- F: Fahrgasse

## Patentansprüche

1. Verfahren zum Ausbringen von Streugut durch ein Streugerät (10) mit zwei rotierend antreibbaren und nebeneinander angeordneten Schleuderscheiben (12a, 12b), mit den Schritten:
- Erfassen einer in Bewegungsrichtung (B) des Streugeräts (10) vor dem Streugerät (10) verlaufenden feldinternen Streugrenze (G), welche eine Anpassung der Verteilcharakteristik des Streugeräts (10) während des Befahrens von zumindest einer Fahrgasse (F) erfordert; und
- Reduzieren der Menge (M2) an Streugut, welche auf die der feldinternen Streugrenze (G) zugewandte Schleuderscheibe (12b) des Streugeräts (10) aufgegeben wird, während des Durchfahrens eines ersten Nahbereichs (I) zur feldinternen Streugrenze (G); und
- Erhöhen der Menge (M1) an Streugut, welche auf die der feldinternen Streugrenze (G) abgewandte Schleuderscheibe (12a) des Streugeräts (10) aufgegeben wird, während des Durchfahrens des ersten Nahbereichs (I) zur feldinternen Streugrenze (G),
**gekennzeichnet durch** den Schritt:
- Reduzieren der Menge (M1) an Streugut, welche auf die der feldinternen Streugrenze (G) abgewandte Schleuderscheibe (12a) des Streugeräts (10) aufgegeben wird, während des Durchfahrens eines zweiten Nahbereichs (II) zur feldinternen Streugrenze (G), welcher an den ersten Nahbereich (I) zur feldinternen Streugrenze (G) anschließt;
wobei der Anteil, um welchen die Menge (M1) an Streugut, welche während des Durchfahrens des zweiten Nahbereichs (II) zur feldinternen Streugrenze (G) auf die der feldinternen Streugrenze (G) abgewandte Schleuderscheibe (12a) des Streugeräts (10) aufgegeben wird, reduziert wird, dem Anteil entspricht, um welchen die Menge (M1) an Streugut, welche während des Durchfahrens des ersten Nahbereichs (I) zur feldinternen Streugrenze (G) auf die der feldinternen Streugrenze (G) abgewandte Schleuderscheibe (12a) des Streugeräts (10) aufgegeben wurde, erhöht wurde.

2. Verfahren nach Anspruch 1,
mit dem Schritt:
- Reduzieren der Menge (M2) an Streugut, welche auf die der feldinternen Streugrenze (G) zugewandte Schleuderscheibe (12b) des Streugeräts (10) aufgegeben wird, während des Durchfahrens eines zweiten Nahbereichs (II) zur feldinternen Streugrenze (G), welcher an den ersten Nahbereich (I) zur feldinternen Streugrenze (G) anschließt;
wobei die Menge (M2) an Streugut, welche auf die der feldinternen Streugrenze (G) zugewandte Schleuderscheibe (12b) des Streugeräts (10) aufgegeben wird, während des Durchfahrens des zweiten Nahbereichs (II) zur feldinternen Streugrenze (G) vorzugsweise auf null reduziert wird.

3. Verfahren nach einem der vorstehenden Ansprüche,
wobei die Gesamtmenge an Streugut, welche während des Durchfahrens des ersten Nahbereichs (I) und des zweiten Nahbereichs (II) auf die der feldinternen Streugrenze (G) abgewandte Schleuderscheibe (12a) des Streugeräts (10) und auf die der feldinternen Streugrenze (G) zugewandte Schleuderscheibe (12b) des Streugeräts (10) aufgegeben wird, der Gesamtmenge an Streugut für eine entsprechende Fläche im Innenbereich eines Feldes, in welchem aufgrund fehlender feldinterner Streugrenzen eine entsprechende Anpassung der Verteilcharakteristik des Streugeräts nicht notwendig ist, entspricht.

4. Verfahren nach Anspruch 3,
wobei die während des Durchfahrens des ersten Nahbereichs (I) und des zweiten Nahbereichs (II) auf die der feldinternen Streugrenze (G) abgewandte Schleuderscheibe (12a) des Streugeräts (10) zusätzlich aufgegebene Streugutzusatzmenge (MZ) der Streugutmindermenge (MM) entspricht, welche während des Durchfahrens des ersten Nahbereichs (I) und des zweiten Nahbereichs (II) auf die der feldinternen Streugrenze (G) zugewandte Schleuderscheibe (12b) des Streugeräts (10) weniger aufgegeben wird.

5. Verfahren nach einem der vorstehenden Ansprüche,
mit dem Schritt:
- Reduzieren der Menge (M2) an Streugut, welche auf die der feldinternen Streugrenze (G) abgewandte Schleuderscheibe (12a) des Streugeräts (10) aufgegeben wird, während des Durchfahrens eines dritten Nahbereichs (III) zur feldinternen Streugrenze (G), welcher an den zweiten Nahbereich zur feldinternen Streugrenze (G) anschließt;
wobei die Menge (M2) an Streugut, welche auf die der feldinternen Streugrenze (G) abgewandte Schleuderscheibe (12a) des Streugeräts (10) aufgegeben wird, während des Durchfahrens des dritten Nahbereichs (III) zur feldinternen Streugrenze (G) vorzugsweise auf null reduziert wird.

6. Verfahren nach einem der vorstehenden Ansprüche,
mit dem Schritt:
- Verändern des Aufgabepunkts (P1) des auf die der feldinternen Streugrenze (G) abgewandten Schleuderscheibe (12a) des Streugeräts (10) aufgegebenen Streuguts während des Durchfahrens des dritten Nahbereichs (III) zur feldinternen Streugrenze (G).

7. Verfahren nach Anspruch 6,
wobei das Verändern des Aufgabepunkts (P1) des auf die der feldinternen Streugrenze (G) abgewandten Schleuderscheibe (12a) des Streugeräts (10) aufgegebenen Streuguts zumindest einen der folgenden Schritte umfasst:
- Verändern der Relativposition und/oder der Relativausrichtung der der feldinternen Streugrenze (G) abgewandten Schleuderscheibe (12a) und eines Dosierorgans, welches der der feldinternen Streugrenze (G) abgewandten Schleuderscheibe (12a) zugeordnet ist;
- Bewegen der der feldinternen Streugrenze (G) abgewandten Schleuderscheibe (12a);
- Bewegen eines Dosierorgans, welches der der feldinternen Streugrenze (G) abgewandten Schleuderscheibe (12a) zugeordnet ist.

8. Verfahren nach Anspruch 6 oder 7,
wobei das Verändern des Aufgabepunkts (P1) des auf die der feldinternen Streugrenze (G) abgewandten Schleuderscheibe (12a) des Streugeräts (10) aufgegebenen Streuguts derart erfolgt, dass das Streubild (14a) der der feldinternen Streugrenze (G) abgewandten Schleuderscheibe (12a) von der Streugrenze (G) weggedreht wird.

9. Streugerät (10) zum Ausbringen von Streugut, insbesondere Düngerstreuer, mit
- zwei rotierend antreibbaren und nebeneinander angeordneten Schleuderscheiben (12a, 12b);
wobei das Streugerät (10) dazu eingerichtet ist, das Verfahren zum Ausbringen von Streugut nach einem der vorstehenden Ansprüche auszuführen.

10. Ausbringkombination (100), mit
- einem Streugerät (10) gemäß Anspruch 9 zum Ausbringen von Streugut, welches insbesondere als Düngerstreuer ausgebildet ist; und
- einem das Streugerät (10) ziehenden oder tragenden Fahrzeug (102), welches insbesondere als Traktor ausgebildet ist.

## Claims

1. Method for dispensing material to be spread using a spreading device (10) having two centrifugal discs (12a, 12b) that are able to be driven in rotation and are arranged alongside one another, having the steps of:
- sensing a field-internal spreading limit (G) extending in front of the spreading device (10) in the direction of movement (B) of the spreading device (10), said spreading limit (G) requiring an adaptation of the distribution characteristics of the spreading device (10) while travelling along at least one tramline (F); and
- reducing the amount (M2) of material to be spread that is discharged onto that centrifugal disc (12b) of the spreading device (10) that faces the field-internal spreading limit (G), while travelling through a first local area (I) of the field-internal spreading limit (G); and
- increasing the amount (M1) of material to be spread that is discharged onto that centrifugal disc (12a) of the spreading device (10) that faces away from the field-internal spreading limit (G), while travelling through the first local area (I) of the field-internal spreading limit (G),
**characterized by** the step of:
- reducing the amount (M1) of material to be spread that is discharged onto that centrifugal disc (12a) of the spreading device (10) that faces away from the field-internal spreading limit (G), while travelling through a second local area (II) of the field-internal spreading limit (G), which adjoins the first local area (I) of the field-internal spreading limit (G);
wherein the proportion by which the amount (M1) of material to be spread that is discharged onto that centrifugal disc (12a) of the spreading device (10) that faces away from the field-internal spreading limit (G) is reduced while travelling through the second local area (II) of the field-internal spreading limit (G) corresponds to the proportion by which the amount (M1) of material to be spread that was discharged onto that centrifugal disc (12a) of the spreading device (10) that faces away from the field-internal spreading limit (G) was increased while travelling through the first local area (I) of the field-internal spreading limit (G).

2. Method according to Claim 1,
having the step of:
- reducing the amount (M2) of material to be spread that is discharged onto that centrifugal disc (12b) of the spreading device (10) that faces the field-internal spreading limit (G), while travelling through a second local area (II) of the field-internal spreading limit (G), which adjoins the first local area (I) of the field-internal spreading limit (G);
wherein the amount (M2) of material to be spread that is discharged onto that centrifugal disc (12b) of the spreading device (10) that faces the field-internal spreading limit (G), while travelling through the second local area (II) of the field-internal spreading limit (G), is reduced preferably to zero.

3. Method according to either of the preceding claims, wherein the total amount of material to be spread that is discharged onto that centrifugal disc (12a) of the spreading device (10) that faces away from the field-internal spreading limit (G) and onto that centrifugal disc (12b) of the spreading device (10) that faces the field-internal spreading limit (G), while travelling through the first local area (I) and the second local area (II), corresponds to the total amount of material to be spread for a corresponding area in the interior of a field, in which an appropriate adaptation of the distribution characteristics of the spreading device is not necessary on account of a lack of field-internal spreading limits.

4. Method according to Claim 3,
wherein the additional amount of material to be spread (MZ) that is additionally discharged onto that centrifugal disc (12a) of the spreading device (10) that faces away from the field-internal spreading limit (G), while travelling through the first local area (I) and the second local area (II), corresponds to the smaller amount of material to be spread (MM) that is discharged less onto that centrifugal disc (12b) of the spreading device (10) that faces the field-internal spreading limit (G), while travelling through the first local area (I) and the second local area (II).

5. Method according to one of the preceding claims, having the step of:
- reducing the amount (M2) of material to be spread that is discharged onto that centrifugal disc (12a) of the spreading device (10) that faces away from the field-internal spreading limit (G), while travelling through a third local area (III) of the field-internal spreading limit (G), which adjoins the second local area of the field-internal spreading limit (G);
wherein the amount (M2) of material to be spread that is discharged onto that centrifugal disc (12a) of the spreading device (10) that faces away from the field-internal spreading limit (G), while travelling through the third local area (III) of the field-internal spreading limit (G), is reduced preferably to zero.

6. Method according to one of the preceding claims, having the step of:
- changing the discharging point (P1) of the material to be spread that is discharged onto that centrifugal disc (12a) of the spreading device (10) that faces away from the field-internal spreading limit (G), while travelling through the third local area (III) of the field-internal spreading limit (G).

7. Method according to Claim 6,
wherein the changing of the discharging point (P1) of the material to be spread that is discharged onto that centrifugal disc (12a) of the spreading device (10) that faces away from the field-internal spreading limit (G) comprises at least one of the following steps:
- changing the relative position and/or the relative orientation of the centrifugal disc (12a) that faces away from the field-internal spreading limit (G) and of a metering member that is assigned to the centrifugal disc (12a) that faces away from the field-internal spreading limit (G);
- moving the centrifugal disc (12a) that faces away from the field-internal spreading limit (G);
- moving a metering member that is assigned to the centrifugal disc (12a) that faces away from the field-internal spreading limit (G).

8. Method according to Claim 6 or 7,
wherein the changing of the discharging point (P1) of the material to be spread that is discharged onto that centrifugal disc (12a) of the spreading device (10) that faces away from the field-internal spreading limit (G) is effected such that the spreading pattern (14a) of the centrifugal disc (12a) that faces away from the field-internal spreading limit (G) is turned away from the spreading limit (G).

9. Spreading device (10) for dispensing material to be spread, in particular fertilizer spreader, having
- two centrifugal discs (12a, 12b) that are able to be driven in rotation and are arranged alongside one another;
wherein the spreading device (10) is set up to carry out the method for dispensing material to be spread according to one of the preceding claims.

10. Dispensing combination (100) having
- a spreading device (10) according to Claim 9 for dispensing material to be spread, which is configured in particular as a fertilizer spreader; and
- a vehicle (102) pulling or carrying the spreading device (10), which is configured in particular as a tractor.

## Revendications

1. Procédé d'épandage de matière d'épandage au moyen d'un épandeur (10) comportant deux disques centrifuges (12a, 12b) pouvant être entraînés en rotation et juxtaposés, comportant les étapes de :
- détection d'une limite d'épandage (G) interne au champ s'étendant devant l'épandeur (10) dans le sens de déplacement (B) de l'épandeur (10), laquelle limite nécessite une adaptation de la caractéristique de distribution de l'épandeur (10) pendant le parcours d'au moins une voie de cheminement (F) ; et
- réduction de la quantité (M2) de matière d'épandage, qui est déversée sur le disque centrifuge (12b) de l'épandeur (10) tourné vers la limite d'épandage (G) interne au champ, pendant la traversée d'une première zone proche (I) de la limite d'épandage (G) interne au champ ; et
- augmentation de la quantité (M1) de matière d'épandage, qui est déversée sur le disque centrifuge (12a) de l'épandeur (10) opposé à la limite d'épandage (G) interne au champ, pendant la traversée de la première zone proche (I) de la limite d'épandage (G) interne au champ,
**caractérisé par** l'étape de :
- réduction de la quantité (M1) de matière d'épandage, qui est déversée sur le disque centrifuge (12a) de l'épandeur (10) opposé à la limite d'épandage (G) interne au champ, pendant la traversée d'une deuxième zone proche (II) de la limite d'épandage (G) interne au champ, laquelle deuxième zone proche est adjacente à la première zone proche (I) de la limite d'épandage (G) interne au champ ;
la proportion suivant laquelle la quantité (M1) de matière d'épandage, qui est déversée sur le disque centrifuge (12a) de l'épandeur (10) opposé à la limite d'épandage (G) interne au champ pendant la traversée de la deuxième zone proche (II) de la limite d'épandage (G) interne au champ, est réduite correspondant à la proportion suivant laquelle la quantité (M1) de matière d'épandage, qui a été déversée sur le disque centrifuge (12a) de l'épandeur (10) opposé à la limite d'épandage (G) interne au champ pendant la traversée de la première zone proche (I) de la limite d'épandage (G) interne au champ, a été augmentée.

2. Procédé selon la revendication 1,
comportant l'étape de :
- réduction de la quantité (M2) de matière d'épandage, qui est déversée sur le disque centrifuge (12b) de l'épandeur (10) tourné vers la limite d'épandage (G) interne au champ, pendant la traversée d'une deuxième zone proche (II) de la limite d'épandage (G) interne au champ, laquelle deuxième zone proche est adjacente à la première zone proche (I) de la limite d'épandage (G) interne au champ ;
la quantité (M2) de matière d'épandage, qui est déversée sur le disque centrifuge (12b) de l'épandeur (10) tourné vers la limite d'épandage (G) interne au champ, pendant la traversée de la deuxième zone proche (II) de la limite d'épandage (G) interne au champ, étant de préférence réduite à zéro.

3. Procédé selon l'une des revendications précédentes, la quantité totale de matière d'épandage, qui est déversée sur le disque centrifuge (12a) de l'épandeur (10) opposé à la limite d'épandage (G) interne au champ et sur le disque centrifuge (12b) de l'épandeur (10) tourné vers la limite d'épandage (G) interne au champ pendant la traversée de la première zone proche (I) et de la deuxième zone proche (II) correspondant à la quantité totale de matière d'épandage pour une aire correspondante dans la zone intérieure d'un champ dans lequel, pour cause d'absences de limite d'épandage internes au champ, une adaptation correspondante de la caractéristique de distribution de l'épandeur n'est pas nécessaire.

4. Procédé selon la revendication 3,
la quantité supplémentaire de matière d'épandage (MZ) déversée en plus pendant la traversée de la première zone proche (I) et de la deuxième zone proche (II) sur le disque centrifuge (12a) de l'épandeur (10) opposé à la limite d'épandage (G) interne au champ correspondant à la quantité réduite de matière d'épandage (MM) qui a été moins évacuée pendant la traversée de la première zone proche (I) et de la deuxième zone proche (II) sur le disque centrifuge (12b) de l'épandeur (10) tourné vers la limite d'épandage (G) interne au champ.

5. Procédé selon l'une des revendications précédentes, comportant l'étape de :
- réduction de la quantité (M2) de matière d'épandage, qui est déversée sur le disque centrifuge (12a) de l'épandeur (10) opposé à la limite d'épandage (G) interne au champ, pendant la traversée d'une troisième zone proche (III) de la limite d'épandage (G) interne au champ, laquelle troisième zone proche est adjacente à la deuxième zone proche de la limite d'épandage (G) interne au champ ;
la quantité (M2) de matière d'épandage, qui est déversée sur le disque centrifuge (12a) de l'épandeur (10) opposé à la limite d'épandage (G) interne au champ, pendant la traversée de la troisième zone proche (III) de la limite d'épandage (G) interne au champ, étant de préférence réduite à zéro.

6. Procédé selon l'une des revendications précédentes, comportant l'étape de :
- modification du point de déversement (P1) de la matière d'épandage déversée sur le disque centrifuge (12a) de l'épandeur (10) opposé à la limite d'épandage (G) interne au champ pendant la traversée de la troisième zone proche (III) de la limite d'épandage (G) interne au champ.

7. Procédé selon la revendication 6,
dans lequel la modification du point de déversement (P1) de la matière d'épandage déversée sur le disque centrifuge (12a) de l'épandeur (10) opposé à la limite d'épandage (G) interne au champ comprend au moins l'une des étapes suivantes :
- modification de la position relative et/ou de l'orientation relative du disque centrifuge (12a) opposé à la limite d'épandage (G) interne au champ et d'un organe de dosage qui est associé au disque centrifuge (12a) opposé à la limite d'épandage (G) interne au champ ;
- déplacement du disque centrifuge (12a) opposé à la limite d'épandage (G) interne au champ ;
- déplacement d'un organe de dosage, lequel est associé au disque centrifuge (12a) opposé à la limite d'épandage (G) interne au champ.

8. Procédé selon la revendication 6 ou 7,
dans lequel la modification du point de déversement (P1) de la matière d'épandage déversée sur le disque centrifuge (12a) de l'épandeur (10) opposé à la limite d'épandage (G) interne au champ s'effectue de telle sorte que le profil d'épandage (14a) du disque centrifuge (12a) opposé à la limite d'épandage (G) interne au champ est détourné de la limite d'épandage (G).

9. Épandeur (10) servant à l'épandage de matière d'épandage, en particulier épandeur d'engrais, comportant
- deux disques centrifuges (12a, 12b) pouvant être entraînés en rotation et juxtaposés ;
l'épandeur (10) étant conçu pour mettre en œuvre le procédé d'épandage de matière d'épandage selon l'une des revendications précédentes.

10. Combinaison d'épandage (100), comportant
- un épandeur (10) selon la revendication 9 pour l'épandage de matière d'épandage, lequel est réalisé en particulier sous forme d'épandeur d'engrais ; et
- un véhicule (102) tirant ou supportant l'épandeur (10), lequel véhicule est en particulier réalisé sous forme de tracteur.
